# FASCICULE DE BREVET EUROPEEN

(11) **EP 0 788 833 B1**
(45) Date de publication et mention de la délivrance du brevet: **26.09.2001**
(21) Numéro de dépôt: 97400205.7
(22) Date de dépôt: 29.01.1997
(51) Int. Cl.: B01J 19/12, B01D 67/00, B29C 59/14, B43K 1/00

(54) **Procédé pour augmenter la mouillabilité d'un corps poreux et dispositif de mise en oeuvre du procédé**
Verfahren zur Verbesserung des Benetzungsverhaltens eines porösen Körpers sowie Vorrichtung zur Durchführung dieses Verfahrens
Process for increasing the wettability of a porous body and device for carrying out the process

(30) Priorité: 12.02.1996 FR 9601700
(43) Date de publication de la demande: 13.08.1997
(73) Titulaire: CONTE S.A., 62200 Boulogne sur Mer (FR)
(72) Inventeur: Gourmand, Pierre, 59800 Lille (FR); Quensierre, Jean Denis, 59170 Croix (FR); Dessaux, Odile, 59800 Lille (FR); Bedhome, Vincent, 62240 Desvres (FR); Duez, José, 62200 Boulogne Sur Mer (FR); Chavatte, Philippe, 62200 Boulogne Sur Mer (FR)
(74) Mandataire: Keib, Gérard

(56) Documents cités:
- EP-A- 0 571 953
- DE-A- 4 141 805
- US-A- 3 870 610
- US-A- 5 344 462
- US-A- 5 447 756
- PATENT ABSTRACTS OF JAPAN vol. 7, no. 259 (C-195), 18 Novembre 1983 & JP 58 141220 A (TOUYOU ROSHI K.K.), 22 Août 1983, & DATABASE WPI Section Ch, Week 8339 Derwent Publications Ltd., London, GB; Class A03, AN 83-774184 & JP 58 141 220 A (TOYO ROSHI K.K.) , 22 Août 1983
- PATENT ABSTRACTS OF JAPAN vol. 9, no. 88 (C-276), 17 Avril 1985 & JP 59 222206 A (NIPPON OIL SEAL KOGYO K.K.), 13 Décembre 1984, & DATABASE WPI Section Ch, Week 8505 Derwent Publications Ltd., London, GB; Class A11, AN 85-027727 & JP 59 222 206 A (NIPPON OIL SEAL IND.) , 13 Décembre 1984
- PATENT ABSTRACTS OF JAPAN vol. 18, no. 482 (C-1247), 8 Septembre 1994 & JP 06 154784 A (TOMOEGAWA PAPER CO. LTD.), 3 Juin 1994,
- DATABASE WPI Section Ch, Week 8336 Derwent Publications Ltd., London, GB; Class A04, AN 83-753643 XP002017899 & DD 200 531 A (AKAD. WISSENSCHAFTEN DDR & GORE ENTERPRISE HOLDING INC.) , 11 Mai 1983
- ADHASION, vol. 33, no. 5, 1989, BERLIN DE, pages 10-15, XP002017898 G. LIEBEL: "Oberflächenbehandlung mittels Niederdruckplasma"

## Description

La présente invention concerne un procédé pour augmenter la mouillabilité d'un corps poreux vis-à-vis d'un fluide et son dispositif de mise en oeuvre.

Dans de nombreuses applications industrielles, on cherche à augmenter notablement la mouillabilité de corps poreux, c'est-à-dire leur caractère hydrophile à l'égard des liquides ou des gaz.

Différents procédés sont déjà utilisés à ce jour. Il est connu par exemple de tremper le corps poreux à traiter dans un bain contenant des agents tensio-actifs, puis de chauffer le corps poreux afin d'éliminer par évaporation l'eau renfermée dans ce corps poreux.

Ce procédé est fastidieux à mettre en oeuvre et nécessite de chauffer le corps poreux, ce qui peut provoquer des modifications indésirables dans sa structure ou sa forme lorsque ce corps est constitué de matières à point de fusion relativement bas.

Lorsque le corps poreux est fabriqué à partir de poudres moulées, notamment par frittage, il est connu soit de mélanger aux poudres un agent tensio-actif solide, également en poudre, soit d'utiliser des poudres déjà traitées hydrophiles.

Cependant, lors de la réalisation du corps poreux à partir de ces poudres, il est nécessaire de chauffer celles-ci pour obtenir la cohésion du corps poreux.

Ainsi, lors d'un procédé de moulage par frittage, des températures de l'ordre de 200 à 250°C sont fréquemment atteintes.

Ce chauffage a pour effet de perturber le caractère hydrophile des poudres et les propriétés des agents tensio-actifs.

La présente invention a pour but de résoudre les inconvénients précités et de proposer un procédé de traitement directement applicable au corps poreux déjà formé, sans chauffage de celui-ci.

Dans le procédé selon l'invention on soumet le corps poreux, dans une enceinte de traitement, à un plasma d'azote généré par une décharge d'onde électromagnétique sur un gaz d'azote. Ce procédé est caractérisé en ce que le plasma d'azote dans l'enceinte de traitement est un plasma d'azote en post-décharge non-ionique lointaine.

Le plasma d'azote obtenu est ainsi utilisé pour augmenter la mouillabilité de manière homogène d'un corps poreux vis-à-vis des fluides.

On connaissait l'utilisation des plasmas différés d'azote pour augmenter l'adhésivité de surfaces de matériaux polymères, notamment du polypropylène. Une telle utilisation est décrite dans le brevet européen EP-A- 0 296.002. Les documents US-A- 3 870 610, US-A- 5 344 462 et US-A- 5 447 756 décrivent l'amélioration de la mouillabilité des produits poreux par traitement au plasma.

Or, de manière surprenante, le plasma d'azote pénètre à l'intérieur même du corps poreux, les atomes d'azote libres n'étant pas pour autant désactivés, ce qui permet ainsi de traiter le corps poreux dans sa masse et de le rendre hydrophile de manière homogène.

Ce procédé de traitement permet d'éviter toute montée en température du corps poreux.

Enfin, contrairement à ce qu'enseignait l'ouvrage intitulé "Plasma froid dans la fabrication des matériaux" (Cold Plasma in Materials Fabrication) de A.F. GRILL, I.E.E.E. Press, Inc New York, page 156, 1993, aucun dépôt ne se forme à l'intérieur du corps poreux et n'obture celui-ci, ce qui présente l'avantage de ne pas modifier la taille des pores du corps ainsi traité. Dans l'ouvrage précité, le traitement de corps poreux par plasma froid d'hélium ou d'oxygène, a pour objet de réduire la taille des pores à la surface du corps, voire de les obturer. De manière inattendue, même des corps de très faible porosité, de l'ordre de 1 *µ*m, peuvent être traités par le procédé conforme à l'invention, sans que leur caractère poreux soit affecté.

De préférence, le gaz d'azote comprend une proportion d'oxygène comprise entre 1% et 5% de la pression totale du gaz.

Le dopage du gaz d'azote par l'oxygène permet d'améliorer encore l'action du plasma d'azote sur le corps poreux.

Le plasma d'azote dans l'enceinte de traitement est un plasma d'azote en post-décharge non-ionique lointaine.

En effectuant le traitement dans une enceinte relativement éloignée de la zone de décharge dans laquelle est généré le plasma, on peut utiliser une enceinte de traitement de grandes dimensions permettant de procéder au traitement simultané de nombreux corps poreux.

De préférence, la température à l'intérieur de l'enceinte de traitement est sensiblement égale à la température ambiante.

Selon une version avantageuse de l'invention, le corps poreux est composé de poudres frittées.

Dans le procédé selon l'invention, le plasma pénètre dans le corps poreux jusqu'à une profondeur de l'ordre de 10 cm.

Le procédé conforme à l'invention permet ainsi de traiter le produit dans sa forme et structure finales. Le caractère hydrophile du corps poreux n'est donc pas perturbé par des étapes ultérieures de fabrication.

Selon un autre aspect de l'invention, un dispositif pour la mise en oeuvre du procédé comprend :
- des moyens pour fournir un gaz d'azote dans une cavité de décharge ;
- des moyens pour introduire une onde électromagnétique dans la cavité de décharge et générer un plasma d'azote ; et
- des moyens formant enceinte pour contenir le corps poreux à traiter et le plasma d'azote.

D'autres particularités et avantages de l'invention apparaîtront encore dans la description ci-après :

Aux dessins annexés donnés à titre d'exemples non limitatifs :
- la figure 1 est un schéma illustrant un dispositif conforme à un mode de réalisation de l'invention ;
- la figure 2 est une vue en coupe selon la ligne II-II à la figure 1 ;
- la figure 3A est une vue en coupe illustrant la mouillabilité d'un corps poreux traité par un procédé de l'art antérieur ; et
- la figure 3B est une vue en coupe analogue à la figure 3A d'un corps poreux traité par le procédé conforme à l'invention.

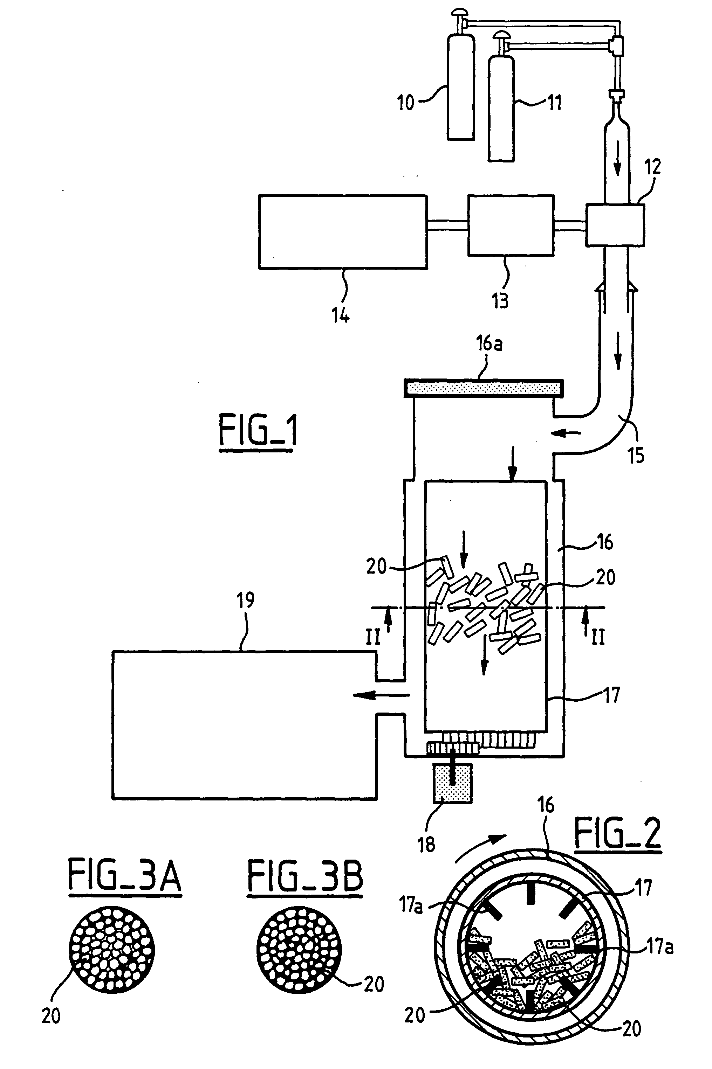

On va d'abord décrire en référence à la figure 1, un dispositif conforme à un mode de réalisation de l'invention pour la mise en oeuvre d'un procédé pour augmenter la mouillabilité d'un corps poreux 20 vis-à-vis d'un fluide.

Le dispositif comprend des moyens 10, 11 pour fournir un gaz d'azote dans une cavité de décharge 12.

De préférence, le gaz d'azote comprend une faible proportion d'oxygène, de l'ordre de 1 à 5% de la pression totale du gaz.

Une source d'azote gazeux 10 et une source d'oxygène 11 sont ainsi reliées à la cavité de décharge 12.

Des moyens 13, 14 pour introduire une onde électromagnétique dans la cavité de décharge 12, comprennent un générateur d'ondes 14 qui, par l'intermédiaire d'un magnétron, permet de produire une onde électromagnétique dans la cavité de décharge 12.

La plage de fréquences pouvant être utilisée est très large : on choisit généralement des fréquences micro-ondes de l'ordre de 880-915 MHz ou 2450 MHz. Des fréquences inférieures, de l'ordre 13,56 MHz ; 27,12 MHz ou 433 MHz peuvent également être utilisées.

Un tube guide d'ondes est prévu entre la sortie du générateur 14 et la cavité de décharge 12. Un circulateur d'eau 13 est prévu autour de ce tube guide d'ondes pour refroidir ce dernier.

Une enceinte 15 est prévue pour introduire le plasma, de manière différée par rapport à la zone de décharge, dans une enceinte de traitement 16 susceptible de contenir le corps poreux à traiter. L'enceinte 15 s'étend entre la cavité de décharge 12 et l'enceinte de traitement 16.

Comme illustré à la figure 2, l'enceinte de traitement 16 comprend un réacteur rotatif 17 dans lequel sont brassés les corps poreux 20 à traiter. Un grand nombre de corps 20 peut être traité simultanément.

Le réacteur 17 est entraîné en rotation de manière connue par un moteur 18, des saillies 17a internes au réacteur permettant de brasser les corps poreux 20.

Une porte 16a est prévue sur une face de l'enceinte de traitement 16 afin d'introduire et de sortir les produits à traiter.

Comme bien illustré à la figure 1 par les différentes flèches, le plasma différé d'azote traverse l'enceinte de traitement 16 et le réacteur 17 et est ensuite récupéré par un groupe de pompage 19. Ce groupe de pompage 19 permet de créer une dépression dans l'enceinte de traitement, de sorte que le plasma d'azote est aspiré dans l'enceinte de traitement 16.

Lors de la mise en oeuvre du procédé conforme à l'invention par le dispositif décrit ci-dessus, le corps poreux 20 est soumis à un plasma froid différé d'azote dans l'enceinte de traitement 16, c'est-à-dire à un plasma d'azote en post-décharge non-ionique lointaine.

Le corps poreux 20 peut être composé de poudres frittées, telles que par exemple des poudres de polyéthylène ou polypropylène. Il peut être composé d'un ou de plusieurs matériaux polymères ou composites.

Ces corps poreux 20 sont généralement obtenus par frittage à une température de l'ordre de 220°C. Les poudres utilisées ont fréquemment une granulométrie comprise entre 1 et 1000 *µ* m, le corps poreux ayant alors une porosité comprise dans un intervalle de 1 à 50 *µ*m.

D'autres corps poreux 20 peuvent également être traités efficacement par le procédé conforme à l'invention : c'est le cas notamment, à titre d'exemples non limitatifs, des fibres textiles, naturelles ou synthétiques, du type acryliques, polyester, des plastiques divers, céramiques...

Dans une application de ce procédé, le corps poreux 20, tel qu'illustré en coupe à la figure 3B, est une pointe d'écriture d'un marqueur, cette pointe étant apte à être en contact avec un réservoir d'encre.

Ces pointes de feutres ou de marqueurs sont généralement fabriquées par frittage à partir de poudres de polyéthylène ou de polypropylène comme expliqué ci-dessus.

Sur les figures 3A et 33, l'encre est illustrée en trait épais, à l'intérieur des pores du corps poreux 20.

On voit alors que, grâce au procédé conforme à l'invention, la pointe 20 représentée à la figure 3B est rendue mouillable de manière homogène et dans toute sa masse.

Au contraire, la pointe 20 illustrée en coupe à la figure 3A, traitée par un procédé classique, ne présente pas le caractère hydrophile de manière homogène dans sa masse.

L'encre ne pénètre dans les pores du corps 20 de la figure 3A qu'en surface, alors que dans les pointes 20 traitées par le procédé conforme à l'invention, l'encre est absorbée dans les pores de la pointe, jusqu'en son centre.(voir figure 3B).

Une autre utilisation du procédé conforme à l'invention consiste à traiter des membranes de filtration, notamment pour la mise en oeuvre ultérieure de filtrations sélectives.

Le procédé conforme à l'invention peut également être utilisé pour traiter, en tant que corps poreux, une membrane d'électrolyse ou d'électrophorèse.

Bien entendu, de nombreuses modifications peuvent être apportées aux exemples décrits ci-dessus sans sortir du cadre de l'invention.

## Revendications

1. Procédé pour augmenter de manière homogène la mouillabilité d'un corps poreux (20) vis-à-vis d'un fluide, dans lequel on soumet ledit corps poreux (20), dans une enceinte de traitement (12,15,16), à un plasma d'azote généré par une décharge d'onde électromagnétique sur un gaz d'azote, **caractérisé en ce que** le plasma d'azote dans l'enceinte de traitement (16) est un plasma en post-décharge non-ionique lointaine.

2. Procédé conforme à la revendication 1, **caractérisé en ce que** le gaz d'azote comprend une proportion d'oxygène comprise entre 1 et 5% de la pression totale du gaz.

3. Procédé conforme à l'une des revendications 1 ou 2, **caractérisé en ce que** la température à l'intérieur de l'enceinte de traitement (15,16) est sensiblement égale à la température ambiante.

4. Procédé conforme à l'une des revendications 1 à 3, **caractérisé en ce que** le corps poreux est composé d'un ou de plusieurs matériaux polymères ou composites.

5. Procédé conforme à l'une des revendications 1 à 4, **caractérisé en ce que** le corps poreux (20) est composé de poudres frittées.

6. Procédé conforme à l'une des revendications 1 à 5, **caractérisé en ce que** le corps poreux (20) comprend du polyéthylène.

7. Procédé conforme à l'une des revendications 1 à 5, **caractérisé en ce que** le corps poreux (20) comprend du polypropylène.

8. Procédé conforme à l'une des revendications 1 à 7, **caractérisé en ce que** le plasma pénètre dans le corps poreux jusqu'à une profondeur de l'ordre de 10 cm.

9. Procédé conforme à l'une des revendications 1 à 3, **caractérisé en ce que** le corps poreux (20) est composé de fibres textiles.

10. Procédé conforme à l'une des revendications 1 à 9, **caractérisé en ce que** le corps poreux (20) a une porosité comprise entre 1 et 50 *µ*m.

11. Dispositif pour la mise en oeuvre du procédé conforme à l'une des revendications 1 à 10, **caractérisé en ce qu'**il comprend :
- des moyens (10, 11) pour fournir un gaz d'azote dans une cavité de décharge (12) ;
- des moyens (13, 14) pour introduire une onde électromagnétique dans ladite cavité de décharge (12) et générer un plasma d'azote ; et
- des moyens formant enceinte (12,15,16) pour contenir le corps poreux (20) à traiter et le plasma d'azote.

12. Dispositif conforme à la revendication 11, **caractérisé en ce qu'**il comprend une enceinte (15) s'étendant entre la cavité de décharge (12) et une enceinte de traitement (16), adaptée à introduire le plasma d'azote dans l'enceinte de traitement (16).

13. Dispositif conforme à la revendication 12 **caractérisé en ce que** l'enceinte de traitement (16) comprend un réacteur rotatif (17) dans lequel sont brassés plusieurs corps poreux (20) à traiter.

14. Utilisation dudit procédé conforme à l'une des revendications 1 à 10, **caractérisée en ce que** ledit corps poreux est une pointe d'écriture d'un marqueur, ladite pointe étant apte à être en contact avec un réservoir d'encre.

15. Utilisation du procédé conforme à l'une des revendications 1 à 10, **caractérisée en ce que** ledit corps poreux est une membrane de filtration.

16. Utilisation du procédé conforme à l'une des revendications 1 à 10, **caractérisée en ce que** ledit corps poreux est une membrane d'électrolyse ou d'électrophorèse.

## Patentansprüche

1. Verfahren zum homogenen Verbessern der Benetzbarkeit eines porösen Körpers (20) gegenüber einem Fluid, bei welchem der poröse Körper (20) in einem Behandlungsraum (12, 15, 16) einem durch Entladung einer elektromagnetischen Strahlung in einem Stickstoffgas erzeugten Stickstoffplasma ausgesetzt wird,
**dadurch gekennzeichnet, dass** das Stickstoffplasma im Behandlungsraum (16) ein Plasma im fernen nicht-ionischen Nachleuchten ist.

2. Verfahren nach Anspruch 1,
**dadurch gekennzeichnet, dass** das Stickstoffgas einen Anteil an Sauerstoff aufweist, der zwischen 1 und 5% des gesamten Gasdrucks liegt.

3. Verfahren nach einem der Ansprüche 1 oder 2,
**dadurch gekennzeichnet, dass** die Temperatur im Innern des Behandlungsraums (15, 16) der Umgebungstemperatur im wesentlichen gleich ist.

4. Verfahren nach einem der Ansprüche 1 bis 3,
**dadurch gekennzeichnet, dass** der poröse Körper aus einem oder mehreren Polymer- oder Verbundmaterialien zusammengesetzt ist.

5. Verfahren nach einem der Ansprüche 1 bis 4,
**dadurch gekennzeichnet, dass** der poröse Körper (20) aus Sinterpulver zusammengesetzt ist.

6. Verfahren nach einem der Ansprüche 1 bis 5,
**dadurch gekennzeichnet, dass** der poröse Körper (20) Polyethylen aufweist.

7. Verfahren nach einem der Ansprüche 1 bis 5,
**dadurch gekennzeichnet, dass** der poröse Körper (20) Polypropylen aufweist.

8. Verfahren nach einem der Ansprüche 1 bis 7,
**dadurch gekennzeichnet, dass** das Plasma in den porösen Körper bis in eine Tiefe in der Größenordnung von 10 cm eindringt.

9. Verfahren nach einem der Ansprüche 1 bis 3,
**dadurch gekennzeichnet, dass** der poröse Körper (20) aus Textilfasern zusammengesetzt ist.

10. Verfahren nach einem der Ansprüche 1 bis 9,
**dadurch gekennzeichnet, dass** der poröse Körper (20) eine Porosität im Bereich zwischen 1 und 50 µm hat.

11. Vorrichtung zur Durchführung des Verfahrens nach einem der Ansprüche 1 bis 10,
**dadurch gekennzeichnet, dass** sie aufweist:
- Mittel (10, 11) zum Liefern eines Stickstoffgases in einen Entladungshohlraum (12);
- Mittel (13, 14) zum Einbringen einer elektromagnetischen Strahlung in den Entladungshohlraum (12) und Erzeugen eines Stickstoffplasmas; und
- Mittel, die einen Raum (12, 15, 16)formen, der den zu behandelnden porösen Körper (20) und das Stickstoffplasma beinhaltet.

12. Vorrichtung nach Anspruch 11,
**dadurch gekennzeichnet, dass** sie einen sich zwischen dem Entladungshohlraum (12) und einem Behandlungsraum (16) erstreckenden Raum (15) aufweist, der geeignet ist das Stickstoffplasma in den Behandlungsraum (16) einzubringen.

13. Vorrichtung nach Anspruch 12,
**dadurch gekennzeichnet, dass** der Behandlungsraum (16) einen Rotationsreaktor (17) aufweist, in welchem mehrere zu behandelnde poröse Körper (20) gemischt werden.

14. Verwendung des Verfahrens nach einem der Ansprüche 1 bis 10,
**dadurch gekennzeichnet, dass** der poröse Körper eine Schreibspitze eines Textmarkierungsstifts ist, wobei die Spitze geeignet ist, Kontakt zu einem Tintenbehälter zu haben.

15. Verwendung des Verfahrens nach einem der Ansprüche 1 bis 10,
**dadurch gekennzeichnet, dass** der poröse Körper eine Filtermembran ist.

16. Verwendung des Verfahrens nach einem der Ansprüche 1 bis 10,
**dadurch gekennzeichnet, dass** der poröse Körper eine Elektrolyse- oder Elektrophoresemembran ist.

## Claims

1. Method for homogeneously increasing the wettability of a porous body (20) in relation to a fluid, in which said porous body (20) is subjected, in a treatment chamber (12, 15, 16), to a nitrogen plasma generated by an electromagnetic wave discharge on a nitrogen gas, **characterised in that** the nitrogen plasma in the treatment chamber (16) is a nonionic remote afterglow plasma.

2. Method in accordance with Claim 1, **characterised in that** the nitrogen gas comprises an oxygen ratio of between 1 and 5 % of the total gas pressure.

3. Method in accordance with one of Claims 1 or 2, **characterised in that** the temperature inside the treatment chamber (15, 16) is substantially equal to room temperature.

4. Method in accordance with one of Claims 1 to 3, **characterised in that** the porous body consists of one or more polymer or composite materials.

5. Method in accordance with one of Claims 1 to 4, **characterised in that** the porous body (20) consists of sintered powders.

6. Method in accordance with one of Claims 1 to 5, **characterised in that** the porous body (20) comprises polyethylene.

7. Method in accordance with one of Claims 1 to 5, **characterised in that** the porous body (20) comprises polypropylene.

8. Method in accordance with one of Claims 1 to 7, **characterised in that** the plasma penetrates the porous body to a depth of about 10 cm.

9. Method in accordance with one of Claims 1 to 3, **characterised in that** the porous body (20) consists of textile fibres.

10. Method in accordance with one of Claims 1 to 9, **characterised in that** the porous body (20) has a porosity of between 1 and 50 *µ*m.

11. Device for carrying out the method in accordance with one of Claims 1 to 10, **characterised in that** it comprises:
- means (10, 11) for providing a nitrogen gas in a discharge cavity (12);
- means (13, 14) for introducing an electromagnetic wave into said discharge cavity (12) and generating a nitrogen plasma; and
- chamber means (12, 15, 16) for holding the porous body (20) to be treated and the nitrogen plasma.

12. Device in accordance with Claim 11, **characterised in that** it comprises a chamber (15) extending between the discharge cavity (12) and a treatment chamber (16), adapted to introduce the nitrogen plasma into the treatment chamber (16).

13. Device in accordance with Claim 12, **characterised in that** the treatment chamber (16) comprises a rotating reactor (17) in which several porous bodies (20) to be treated are stirred.

14. Application of said method in accordance with one of Claims 1 to 10, **characterised in that** said porous body is a writing tip of a marker, said tip being capable of being in contact with an ink reservoir.

15. Application of the method in accordance with one of Claims 1 to 10, **characterised in that** said porous body is a filtering membrane.

16. Application of the method in accordance with one of Claims 1 to 10, **characterised in that** said porous body is an electrolysis or electrophoresis membrane.
